# EUROPEAN PATENT SPECIFICATION

(11) **EP 4 544 284 B1**
(45) Date of publication and mention of the grant of the patent: **04.11.2026**
(21) Application number: 23736270.2
(22) Date of filing: 27.06.2023
(51) Int. Cl.: G01N 3/04, G01N 3/317

(54) **MATERIAL TESTING APPARATUS FOR MATERIAL TESTING OF A SPECIMEN**
MATERIALPRÜFVORRICHTUNG ZUR MATERIALPRÜFUNG EINER PROBE
APPAREIL DE TEST DE MATÉRIAU POUR TEST DE MATÉRIAU D'UN ÉCHANTILLON

(30) Priority: 27.06.2022 DE 102022115919
(43) Date of publication of application: 30.04.2025
(73) Proprietor: 4a engineering GmbH, 8772 Traboch (AT)
(72) Inventor: SCHWAB, Martin, 8010 Graz (AT); HAFELLNER, Reinhard, 8724 Spielberg (AT); RIEMELMOSER, Stefan, 8774 Mautern in Steiermark (AT); JILKA, Bernhard, 2051 Zellerndorf (AT)
(74) Representative: Dilg, Haeusler, Schindelmann Patentanwaltsgesellschaft mbH
(86) International application number: PCT/EP2023/067513
(87) International publication number: WO 2024/003075

(56) References cited:
- DE-A1- 2 141 510
- KR-B1- 102 407 466
- US-A1- 2018 364 140
- US-B1- 7 533 557
- US-B2- 7 320 242

## Description

### Field of invention

The present invention relates to an apparatus for material testing of the specimen, in particular a battery, and a method for material testing of the specimen.

### Art Background

In material testing, it is necessary to expose material samples to a variety of different types of stress. For example, the material sample is subjected to tensile or compressive stress over a certain period of time. for example, a testing machine may be designed to provide a tensile testing, wherein the material sample is stretched by a specific tensile force. Furthermore, impact tests and bending flexural tests may be conducted by other test machines, wherein an impact element is pressed against the material sample for testing purposes. In addition, testing machines are usually designed for different types of loading speed, e.g. universal testing machines can be used for quasi-static testing only (low speeds), servo-hydraulic machines are usually used for cyclic fatigue testing and special purpose machines (special servo-hydraulic or split Hopkinson bar) for high-speed loading conditions.

The forces can be applied statically or dynamically. Since particularly high forces are at work during testing, the demands on the testing machines are very high, especially with regard to durability and vibration safety. For this reason, testing machines are usually only designed for one load case in order to provide sufficient testing performance for this one load case.

### Prior Art Citations

Patent citation 1: DE2141510A1 (ERICHSEN PER F DR ING) 22 February 1973 (1973-02-22).

Patent citation 2: US2018/364140A1 (MIYAZAKI ZEN [JP] ET AL) 20 December 2018 (2018-12-20).

Patent citation 3: US7533557B1 (MOTT PETER H [US] ET AL) 19 May 2009 (2009-05-19).

Patent citation 4: US7320242B2 (UNIV AKRON [US]) 22 January 2008 (2008-01-22).

### Summary of the Invention

Hence, there may be a need to provide an apparatus for testing a material in a plurality of different load cases.

This need may be met by an apparatus and a method for material testing of a specimen as described by the subject matters of independent claims.

According to first aspect an apparatus according to claim 1 for material testing of a specimen is described. The apparatus comprises a specimen holder arrangement comprising a specimen holder for holding a specimen to be tested, a rod arrangement for moving in direction to the specimen holder for transmitting a mechanical load to the specimen, such that the rod arrangement is transmitting a mechanical load to the specimen, and an electromechanical actuator arrangement for moving the rod arrangement. The electromechanical actuator arrangement is configured for moving the rod arrangement relatively to the specimen holder along a longitudinal impact direction, wherein the electromechanical actuator arrangement is configured to adjust the (e.g. constant, inconstant (i.e. acceleration or deceleration)) speed to any speed between 0 m/s to 12 m/s between the rod arrangement and the specimen holder arrangement other for transmitting a mechanical load to the specimen.

According to a further aspect, a method according to claim 15 for material testing of a specimen by an above-described apparatus is provided. According to the method, a specimen to be tested is attached to the specimen holder. At least one of the rod arrangement and the specimen holder are moved with respect to each other to adjust the speed to any speed between 0 m/s to 12 m/s such that the rod arrangement transmits a mechanical load to the specimen for material testing of the specimen.

The specimen to be tested by the above-described apparatus may be a material part, such as a metal or plastic element, which may have a sheet-like shape or a solid body shape. Furthermore, the specimen to be tested may be a part product, such as a semifinished or finished device. For example, the specimen to be tested may be a battery cell, an arrangement of several cells, a battery module or a battery pack. The device may be used to test material mechanical properties such as tensile testing and impact testing battery puncture tests are also possible. Hence, the specimen holder may hold the device for example in such a manner, that the rod arrangement is adapted to transfer mechanical load (tension, tractive force or press force) against for example housing of the device, in order to provide a respective material test of housing.

The specimen holder arrangement comprises for example a specimen holder is designed for holding the specimen specifically in a detachable manner. For example, the specimen holder may comprise clamping elements for clamping the specimen to be tested. Furthermore, the specimen holder may comprise a magnet, in particular permanent magnet or an electromagnet, in order to fix the specimen, in particular a metallic specimen, to the holding device.

The specimen holder arrangement itself may be detachably fixed to the apparatus, particular to an accommodation section as described in an exemplary embodiment below. Furthermore, the specimen holder may comprise a chamber, in which the specimen is arranged and into which the rod arrangement may movably enter. Through an opening of the chamber an impact element of the rod arrangement reaches the sample attached to the sample holder.

The rod arrangement comprises an impact element with an impact section, which is designed for being pressed against the specimen. In a further exemplary embodiment, the rod arrangement comprises a tension element for transmitting a tractive force to the specimen. Thereby, the rod arrangement is configured for moving in the direction to and away from the specimen holder. The rod arrangement is driven by the electromechanical actuator arrangement and can be moved in an adjustable speed and an adjustable impact force to the specimen.

The electromechanical actuator assembly comprises at least one electromechanical actuator. The electromechanical actuator may be coupled to the rod arrangement for moving the rod arrangement, i.e. a force transmitting rod, relatively to the specimen holder. As described below, additionally or alternatively, a further electromechanical actuator may be coupled to the specimen holder such that the specimen holder is movable relatively to the rod arrangement. Hence, by the term "adjust the speed to any speed between 0 m/s to 12 m/s between at least one of the rod arrangement and the specimen holder arrangement with respect to each other" it is defined that the rod arrangement may be driven to the specimen holder arrangement, the specimen holder arrangement may be driven to the rod arrangement or both, the rod arrangement and the specimen holder arrangement may be both driven and hence moved with respect to each other. Specifically, a constant speed or an inconstant speed, i.e. an acceleration or deceleration, within the range of 0 m/s to 12 m/s may be adjusted. In other words, during a test time interval, the speed may be varied over time.

The electromechanical actuator is a linear motor.

The electromechanical actuator may be for example an electro motor or servo motor for driving the rod arrangement in a desired speed along the impact direction and with a desired impact force. **The** electromechanical actuator is in particular configured for providing an impact energy against the specimen of more than 100J (Joule), in particular more than 200J, further in particular more than 500J.

According to the approach of the present invention, the electromechanical actuator assembly is configured to move the rod arrangement with a speed to at least 4 m/s, in particular to 10 m/s, further in particular to 12 m/s. A speed of 4 m/s means, that between the rod arrangement and the specimen holder arrangement a speed to any speed between 0 m/s to 6 m/s for transmitting a mechanical load to the specimen can be adjusted . In an exemplary embodiment, a constant speed or an inconstant speed, i.e. an acceleration or deceleration, within the range of 0 m/s to 6 m/s or within the range of 0 m/s to 4 m/s may be adjusted. For example, the rod arrangement may apply a force of 25kN when being driven with 3,6 m/s against the specimen.

Hence, the rod arrangement can be driven between e.g. 0 m/s and 12 m/s, for example. Hence, a plurality of load cases can be applied. For example, the rod arrangement may impact the specimen, for example with a high frequency, or the rod arrangement may be pressed or pulls statically against the specimen, such that the press/rod arrangement is transmitting a mechanical load to the specimen. Depending on the actual specimen holder, a variety of mechanical loads can be transmitted, such as e.g. compressive loads, tensile loads, shear loads and/or bending loads. For example, the rod arrangement may load the specimen, for example with high frequency for performing cyclic or fatigue testing, or (with the same arrangement) the rod arrangement may load the specimen statically. Also, the rod arrangement may load the specimen at high speeds for performing high strain rate testing. Hence, by the mentioned apparatus, a plurality of different load cases for material testing may be applied within one and the same apparatus. Hence, material testing can be provided which includes both destructive testing and non-destructive testing of the specimen to be tested. In contrast to the conventional approaches, the present invention combines in one arrangement a universal testing machine used for quasi-static testing only (low speeds), a servo-hydraulic machines used for cyclic fatigue testing and a special purpose machine (e.g. a special servo-hydraulic or split Hopkinson bar) for high speed loading conditions.

According to further exemplary embodiment, the impact direction is parallel to a horizontal direction, when the apparatus is arranged on a ground. In other words, the impact direction and hence, the movement direction of the rod arrangement is perpendicular with respect to the gravitational force direction. By applying such a horizontal alignment of the rod arrangement only a minor effect or disturbance by gravity along the impact direction is caused, so that the same undisturbed movement or acceleration in both directions is possible. This approach contradicts to many conventional approaches, wherein the impact direction is vertical in order to use the weight of the impact tools to generate a higher impact force.

According to further exemplary embodiment, the specimen holder, the electromechanical actuator assembly and the rod arrangement are configured for pressing the rod arrangement to the specimen with a pressing force of more than 5kN, in particular more than 15kN, further in particular more than 20kN or 25 kN.

According to a further exemplary embodiment, the electromechanical actuator assembly and the rod arrangement are configured for conducting a static test for providing a constant pressing force to the specimen to be tested and/or for conducting a dynamic test for varying the impact force in a predefined time span. Accordingly, also test cycles between static and dynamic load against the specimen can be provided by the rod arrangement. By the rod arrangement controlled by the electromechanical actuator assembly a force during a static test may be generated inconstant. For example, in a static test, a very slow movement of the rod arrangement with continuously increasing force up to a specified level or until rupture of the specimen is provided. However, also a so-called creep test is possible, wherein the force is kept constant over longer period of time. During a dynamic test, a faster movement of the rod arrangement with e.g. a pre-acceleration phase may be provided, so that specimen or load introduction device of specimen holder is hit at a specified speed and/ or impact energy. All of these test cases can be performed by the described material testing apparatus.

For example, during an above-described static creep test provides a constant force over longer period of time. However, the force may be not mandatory constant. In a static test, very slow movement of the rod arrangement with continuously increasing force up to a specified level or until rupture of the specimen may be provided. In a dynamic test, a faster movement of the rod arrangement with a pre-acceleration phase so that specimen or load introduction device of the specimen holder is hit with a specified velocity and/ or impact energy.

According to a further exemplary embodiment, the electromechanical actuator arrangement comprises an electromechanical actuator assembly which is configured to move the rod arrangement along the impact direction to and away from the specimen holder in order to perform e.g. static test and/or a cyclic test providing varying loads to the specimen. Hence, it is not only possible to provide a pressing force against the specimen in a direction to the specimen, but also a pulling force in a direction away from the specimen. Hence, also tension tests and also a variety load condition between pressing/bending tests and tension tests can be provided by the inventive arrangement. Also cyclic tests (e.g. subsequent tensile and compressive loading of the specimen at high frequency) are provided. In order to provide the tension tests, the rod arrangement can be rigidly fixed to the specimen, for example by a clamping connection, screw connection or welding connection.

According to a further exemplary embodiment, the electromechanical actuator arrangement comprises a further electromechanical actuator which is configured to move the specimen holder arrangement along the impact direction to and away from the rod arrangement, in particular to perform a static test, a dynamic test or a cyclic test providing varying loads to the specimen. For example, the rod arrangement may non-movably and fixedly mounted to the supporting base and the specimen holder arrangement may be mounted movably along the impact direction to the supporting base. For example, the specimen holder arrangement may be mounted to the supporting base via guiding rails extending along the impact direction. Furthermore, both, the rod arrangement driven by the electromechanical actuator and the specimen holder driven by the further electromechanical actuator may be movable with respect to each other. Hence, a plurality of different load cases can be applied. During a static test, a higher pressing force due to the at least two electromechanical actuator can be generated. Furthermore, due to the two electromechanical actuators, a quicker reaction time and proper acceleration profiles during a dynamic test may be provided.

Hence, with one electromechanical actuator, the speed and speed interval, respectively, may be a continuous interval between 0 - 6 m/s for a one stage electromechanical actuator arrangement having one electromechanical actuator. One stage arrangement is with one motor which travels in the direction of the specimen. Furthermore, the speed values may be doubled, i.e. between 0 - 12 m/s, with a two-stage electromechanical actuator arrangement comprising the above described electromechanical actuator and further electromechanical actuator. By the two-stage arrangement two reciprocating electromechanical actuators are provided where on one is the specimen holder and on the other is the rod arrangement.

According to a further exemplary embodiment, the rod arrangement comprises a stiffness of more than 400 kN/mm. Hence, the rod arrangement can be designed to have a stiffness of more than 400 kN/mm such that a high pressing force can be applied to the specimen. Specifically, if the impact direction is parallel to a horizontal direction and therefore orthogonal to the direction of gravity, the weight for providing a respective stiff rod arrangement neglectable.

According to further exemplary embodiment, the rod arrangement comprises an impact element and a force transmitting element, in particular a force transmitting rod, coupled to the electromechanical actuator. The impact element is in particular harder than the specimen to be tested. Furthermore, the impact element may comprise a conical shape or a pyramid having an impact tip. The impact element may also comprise a hemispherical shape having a round and ball shape impact section. The impact element may also comprise an impact edge having a longitudinal extension or an impact/pin spike for applying a punctual force.

The force transmitting element, such as a force transmitting rod, provides the coupling between the impact element and the electromechanical actuator. The force transmitting element may be coupled to the movable part of the electromechanical actuator, for example directly or via a respective gear. The force transmitting element may be coupled as described below in an exemplary embodiment to slide of a linear motor.

According to further exemplary embodiment, the impact element is detachably coupled to the force transmitting element. Hence, impact elements of different design and shape may be exchanged in order to test the specimen with different load cases, for example. Furthermore, if an impact element is damaged, a respective change of impact elements is possible. The impact element may be coupled by a screw or clamping connection to the force transmitting element. In an alternative embodiment, the force transmitting element and the impact element may be formed of one piece and monolithically, respectively.

According to further exemplary embodiment, the rod arrangement further comprises a force sensor for measuring the impact force between the impact element and the specimen to be tested.

According to further exemplary embodiment, the force sensor is arranged between the impact element and the force transmitting element. Hence, if the force sensor is arranged close to the impact element, a direct measurement and also a proper reachability of the force sensor is possible. Specifically, if the force sensor is mounted close to the impact element at a front and no time delay of force signals during dynamic measurements is generated so that a very exact force measurement is provided. Hence, a direct signal is used instead of delayed signal e.g. from engine controller of a actuator unit.

According to further exemplary embodiment, the force sensor is detachably mounted to at least one of the impact element and the force transmitting element. Therefore, a different type of force sensor can be applied for different load cases or a defect for sensor may be exchanged.

According to further exemplary embodiment, the force sensor is a piezo electric sensor. A piezoelectric sensor is a sensor that uses the piezoelectric effect to measure changes in pressure, acceleration, temperature, strain, or force by converting them to an electrical charge. For a force measurement, the piezoelectric sensor may comprise a thin membrane and a massive base, ensuring that an applied pressure specifically loads the elements in one direction and therefore creates respective electric signals indicative of the applied forces. Additionally or alternatively, also a strain gauge sensor, i.e. a DMS sensor, may be used as a force sensor for a measurement of strain of the rod arrangement.

The electromechanical actuator is a linear motor comprising a movable slide to which the rod arrangement is coupled and a stator extending along the impact direction. The slide is drivable along the impact direction relatively to the stator by electromechanical driving forces generatable between the stator and the slide. The linear motor produces a linear driving force along its length and hence along the impact direction. A typical mode of operation is as a Lorentz-type actuator, in which the applied force is linearly proportional to the current and the magnetic field. By the linear motor, the impact force and the speed of the rod arrangement can be adjusted precisely. Also, the acceleration is adjustable precisely with respect to the desired load cases.

According to a further exemplary embodiment, the force transmitting element is coupled to the movable slide, wherein the force transmitting element has in particular a length along the impact direction which is longer than a traveling distance of the slide along the impact direction. Hence, the maximum traveling distance of the slide can be used to move the rod arrangement, since the impact element arranged on the force transmitting element is not in conflict with structural elements of the linear motor, because of the sufficient length of the force transmitting element.

According to claim 1, the stator comprises a, in particular rectangular, stator table. In a respective exemplary embodiment, the stator table comprises a length along the impact direction and a width orthogonal to the impact direction, wherein the length is longer than the width of the stator table. Hence, forming the stator as a stator table, a large supporting area of the stator and for a slide functioning as the movable part of the electromagnetic motor, is provided. The stator table is adapted for transferring also high loads to the slide in order to transmit the high loads further to the specimen or/or to accelerate the slide to high speeds.

Furthermore, the stator table forms a robust stator for transferring high loads of weight or vibrations via the supporting base to the ground.

According to a further exemplary embodiment, the stator table comprises at least one electrically conductive coil. The respective coils may be wound around the table and may therefore formed the respective magnetic fields, necessary to interact with the slide to generate a driving force. Specifically, three groups of coils may be provided to the stator table, so that a three-phase linear induction motor can be provided. Depending on direction of the flow of the current through a wire of the coils create a respective magnetic field which interfere with the magnetic field of the permanent magnets in the movable part (i.e. the slide) of the linear electric motor. An array of permanent magnets in the slide is mounted between two arrays of coils (one mounted to the upper stator table and one mounted to the lower stator table) both of which are placed so that the magnetic poles are perpendicular to the direction of a moving slide. By time varying the direction of the current flow in the coils the shifting of the movable part, i.e. the slide, is achieved. Coils are powered through the cables by an external electrical power source. The dimensioning of the permanent magnets and the coils is such that it enables the linear testing motor with dynamical properties from low speed of 0 m/s to more than 3 m/s.

A further exemplary embodiment, the at least one electrically conductive coil is liquid, in particular water, cooled. Specifically, when providing a static load case, where the impact element is pressed against the specimen without any movement, high temperatures may be generated at the respective coils interacting with the slide. Hence, by cooling the respective electrically conductive coils, a testing time span can be enlarged due to the cooling of the coils. For example, the stator, in particular the stator table, comprises cooling channels formed in the vicinity of the arrangement of the coils in order to provide a liquid cooling.

According to a further exemplary embodiment, the linear motor comprises a temperature sensor for measuring a temperature of the at least one coil. As described above, when providing a static load case, where the impact element is pressed against the specimen without any movement, high temperatures may be generated at the respective coils interacting with the slide. Hence, one or a plurality of temperature sensors are arranged in the vicinity of the coils, such that an overheating of one of the coils can be detected.

According to a further exemplary embodiment, the stator comprises a further, in particular rectangular, stator table, in particular comprising at least one further electrically conductive coil, wherein the slide is slidably arranged between the stator table and the further stator table. Hence, by providing two stator tables which sandwiches the slide, a stronger magnet field for driving the slide may be provided.

The linear motor may comprise a supporting structure for holding the stator table and the further stator table. Furthermore, the supporting structure may be part pf a supporting base, as described below. A respective guiding rail may be fixed to the supporting structure for providing a slidable coupling with the slide. The guiding rail may comprise a dove tail shape and the slide may comprise a respectively shaped dove tail groove, or vice versa.

According to a further exemplary embodiment, the slide comprises magnet elements, in particular permanent magnet elements. In an exemplary embodiment, the magnet elements are arranged one after the other along the impact direction. The magnet elements may form for example neodymium magnets.

In an exemplary embodiment, in particular if the slide is arranged between two stator tables, one line of magnets may be arranged on the top side of the slide and one line of magnets may be arranged on the bottom side of the slide. Between the two lines of magnets, the slide may comprise a robust slide plate, in particular a metal plate made for example of aluminum, wherein the lines of magnets are arranged on respective opposite surfaces of the slide plate.

In an alternative embodiment of the linear motor, the respective electrically conductive coils may be arranged in the slide and the respective permanent magnets are arranged accordingly at the stator element, in particular at the stator tables.

According to further exemplary embodiment, the slide has a weight of e.g. more than 60kg, 80kg or 100kg. Hence, a high impact energy due to high mass of more than e.g. 60 kg is provided. The weight of the slide may be respectively higher, in particular because the impact direction is horizontally orientated and is therefore considerably higher than in any other electrodynamics testing machine having a vertical impact direction. Specifically, in conventional approaches it is an aim to provide low mass for high frequency testing. however by the arrangement according to the present invention, in particular where the slide is arranged between the two stator tables, high frequencies of slide movement can be achieved also due to high rates of the slide and impact arrangement.

According to a further exemplary embodiment, the apparatus further comprises at least one stopper element configured to stop the movement of the slide along the impact direction, wherein the stopper element is in particular made of elastomeric material. The stopper element is designed to limit the movement of the slide along the impact direction. The stopper element may be fixed to the housing of the arrangement and/or directly or indirectly to the supporting base as described below. Since the stopper element is made of an elastomeric material, the impact force of the slide against the stopper element may be smoothly damped and additionally due to the elastomeric characteristics a spring force may be provided for accelerating the slide in the opposite direction. In particular for high frequency tests, a respective spring force may be desirable.

According to a further exemplary embodiment, the arrangement further comprises a supporting base, onto which the specimen holder, the rod arrangement and the electromechanical actuator arrangement are mounted (directly or indirectly via coupling supporting elements). The supporting base is formed robust for example by a framework of steel rods which can be arranged on the ground. The supporting base transfers respective weight forces and dynamic forces to the ground.

According to a further exemplary embodiment the apparatus further comprises at least one guiding rail extending along the impact direction, wherein the guiding rail is coupled to the supporting base. The rod arrangement and/or a movable part of the electromechanical actuator (such as the slide) is slidably coupled to the guiding rail. The guiding rail may be for example directly coupled via a supporting structure to the supporting base. Furthermore, the slide may be fixed to the stator element, such as the stator table and/or the further stator table, of the linear motor in order to support the slide and the rod arrangement. The stator tables are for example coupled via a supporting structure to the supporting base.

According to a further exemplary embodiment, the supporting base is configured for providing a stiffness of more than 600 kN/mm. Hence, heigh weight forces and also dynamic forces may be transferred to the ground without causing vibrations which could negatively affect the testing procedure. The stiffness may be provided by the robust above-described framework of steel beams and additionally by the below described shear plate.

According to a further exemplary embodiment, the supporting base comprises in particular a supporting plate, in particular an aluminum plate, to which at least the specimen holder and the electromechanical actuator arrangement is mounted. The supporting plate forms a robust and stiff accommodation surface and may be arranged on the rigid framework of steel beams of the supporting base. By arranging the supporting plate within a horizontal plane, forces directed along the horizontal direction are damped and absorbed efficiently.

According to further exemplary embodiment, the supporting base comprises at least one vertical shear panel extending between the ground on the one side and the specimen holder, the rod arrangement and the electromechanical actuator arrangement on the other side (and for example between the supporting plate and the ground). The shear panel is in particular a vertical orientated sheet, in particular a metal sheet. By providing the vertical shear panel, forces (specifically shear forces) extending along the vertical direction and also along the impact direction are absorbed and damped by the vertical shear panel. Specifically, for damping the respective forces, a respective sheet-like panel is sufficient such that also a lightweight solution for damping the vertical forces is provided.

According to further exemplary embodiment, wherein the shear panel is configured for having eigenfrequencies along the impact direction of more than 300 Hz. The eigenfrequencies (i.e. the characteristic frequency) can be adjusted by providing a respective thickness of the shear panel and by using an appropriate material, such as metal.

According to a further exemplary embodiment, the specimen holder is detachably coupled to a holder accommodation section of the supporting base. Hence, by providing a detachable specimen holder, the respective specimen holder may be preassembled with the specimen to be tested before fixing the holder to the holder accommodation section. For example, a plurality of specimen holders may be preassembled with respective specimens to be tested. This improves the testing procedures and make the testing procedures more efficient. The specimen holder may be fixed to the holder accommodation section for example by screw connection or by a clamping connection.

According to a further exemplary embodiment, the holder accommodation section comprises at least one accommodation groove, wherein the specimen holder comprises at least one accommodation pin. The accommodation pin is slidable into the accommodation groove for detachably coupling the specimen holder to the holder accommodation section, wherein the accommodation groove is formed in particular perpendicular to the impact direction. The holder accommodation section may comprise for example a plurality of accommodation grooves that extends within the horizontal plane and perpendicular to the impact direction. The specimen holder may comprise respective accommodation pins that may be slid in the grooves along a direction perpendicular to the impact direction. Hence, the forces induced by the impact of the rod arrangement at the specimen to be tested are directed perpendicular to the sliding direction of the accommodation pins within the grooves such that the force can be transferred directly from the specimen holder into the whole recommendation section. Hence, a robust and simple detachable fixation of the specimen holder to the whole recommendation section of the supporting base is provided.

In an alternative embodiment, the holder accommodation section may comprise vertically extending accommodation pins and the specimen holder comprises a respective accommodation groove. Accordingly, the specimen holder and its respective accommodation groove may be fixed by accommodating the accommodation pins of the holder accommodation section.

It has to be noted that embodiments of the invention have been described with reference to different subject matters. In particular, some embodiments have been described with reference to apparatus type claims whereas other embodiments have been described with reference to method type claims.

### Brief Description of the Drawings

- Fig. 1: shows a perspective view of an arrangement for material testing of a specimen according to an exemplary embodiment of the present invention.
- Fig. 2: shows a detailed view of the front section of the arrangement shown in Fig. 1.
- Fig. 3: shows an arrangement specifically with its supporting base according to an exemplary embodiment of the present invention.
- Fig. 4 and Fig. 5: show an exemplary embodiment of an apparatus providing a rod arrangement for applying a tractive force to the specimen.

### Detailed Description of Exemplary Embodiments

The illustrations in the drawings are schematic. It is noted that in different figures similar or identical elements are provided with the same reference signs.

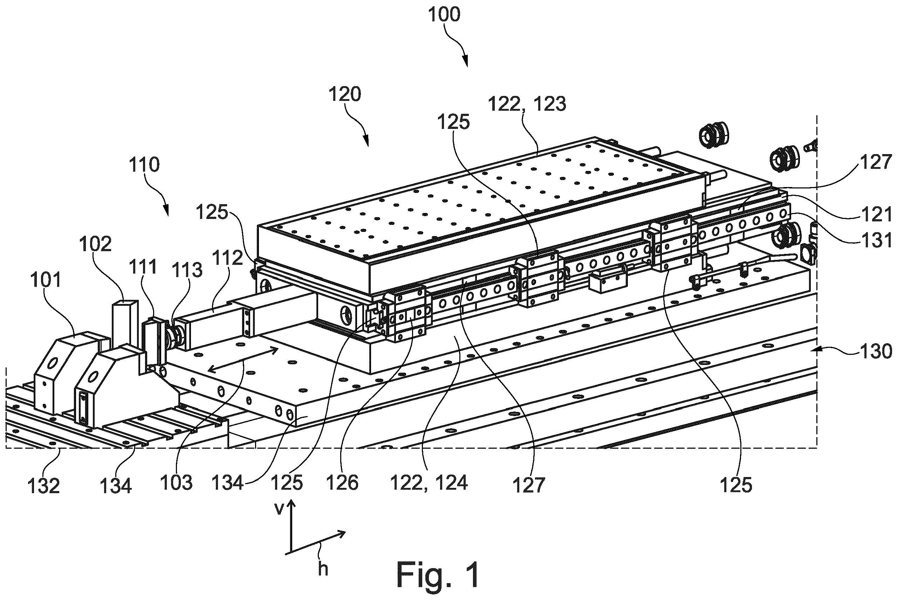

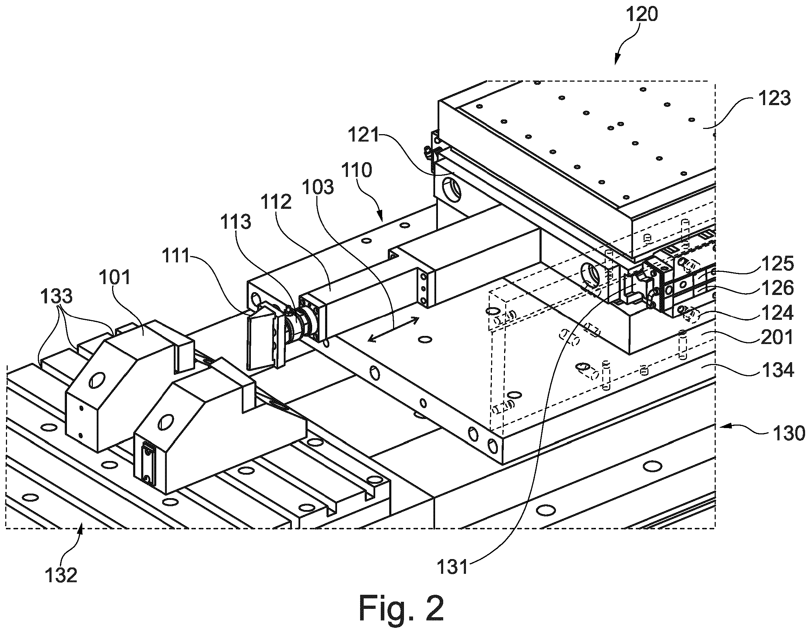

**Fig. 1** and **Fig. 2** show perspective views of an arrangement 100 for material testing of a specimen 102 according to an exemplary embodiment of the present invention. Fig. 2 shows in particular a more detailed view of the front section comprising the specimen holder 101 and the rod arrangement 110.

The apparatus 100 comprises a specimen holder 101 for holding a specimen 102 to be tested, a rod arrangement 110 for moving in direction to the specimen holder 101 for transferring mechanical load to the specimen 102, and an electromechanical actuator arrangement comprising an electromechanical actuator arrangement for moving at least one of the rod arrangement 110 and the specimen holder arrangement with respect to each other. The electromechanical actuator 120 is configured for adjusting the speed to any speed between 0 m/s to 12 m/s between the rod arrangement 110 and the specimen holder 101 along a longitudinal impact direction 103, wherein the electromechanical actuator arrangement is configured to move the rod arrangement 110 with a speed to at least more than 12 m/s. For example, the electromechanical actuator arrangement comprises an electromechanical actuator 120 for moving the rod arrangement 110 with a speed of e.g. 6 m/s. Additionally, the electromechanical actuator arrangement comprises a further electromechanical actuator for moving the specimen holder arrangement with a speed of e.g. 6 m/s. Hence, both, the specimen holder arrangement and the rod arrangement 110 may be moved with respect to each other in a range of 0m/s to 12 m/s.

The specimen holder 101 is designed for holding the specimen 102 specifically in a detachable manner to a holder accommodation section 132 of a supporting base 130. For example, the specimen holder 101 may comprise clamping elements for clamping the specimen 102 to be tested. By providing a detachable specimen holder 101, the respective specimen holder 101 may be preassembled with the specimen 101 to be tested before fixing the holder 101 to the holder accommodation section 132.

The holder accommodation section 132 comprises at least one accommodation groove 133, wherein the specimen holder 101 comprises at least one accommodation pin. The accommodation pin is slidable into the accommodation groove 133 for detachably coupling the specimen holder 101 to the holder accommodation section 132. The accommodation groove 133 is formed in particular perpendicular to the impact direction 103. The holder accommodation section 132 may comprise for example a plurality of accommodation grooves 133 that extends within the horizontal plane and perpendicular to the impact direction 103. The respective accommodation pins of the specimen holder 101 slid in the grooves along a direction perpendicular to the impact direction 103. Hence, the forces induced by the impact of the rod arrangement 110 at the specimen 102 to be tested are directed perpendicular to the sliding direction of the accommodation pins within the grooves 132 such that the force can be transferred directly from the specimen holder 101 into the whole recommendation section 132.

The rod arrangement 110 comprise an impact element 111 having an impact section which is designed for being pressed against the specimen 102 to be tested. Thereby, the rod arrangement 110 is configured for moving in the direction to the specimen holder 101. The rod arrangement 110 is driven by the electromechanical actuator 120 and can be moved in an adjustable speed and an adjustable impact force to the specimen 102.

The electromechanical actuator 120 may be for example an electro motor or servo motor for driving the rod arrangement 110 in a desired speed along the impact direction 103 and with a desired impact force. The electromechanical actuator 120 a linear motor. The electromechanical actuator 120 is in particular configured for providing an impact energy against the specimen 102 of more than 100J.

The electromechanical actuator 120 is configured to move the rod arrangement 110 with a speed to at least more than 3 m/s. Therefore, a plurality of load cases can be applied. For example, the rod arrangement 110 may impact the specimen 102 with a high frequency, or the rod arrangement 110 may be pressed statically against the specimen 102 or provides statically a tension/tractive force to the specimen 102. Hence, by the mentioned apparatus 100, a plurality of different load cases for material testing may be applied within one and the same apparatus.

The apparatus 100 is configured that the impact direction 103 is parallel to a horizontal direction h, when the apparatus 100 is arranged on a ground. In other words, the impact direction 103 and hence, the movement direction of the rod arrangement 110 is perpendicular with respect to the gravitational force direction (along the vertical direction v). By applying such a horizontal alignment of the rod arrangement 110 only a minor effect or disturbance by gravity along the impact direction 103 is caused, so that the same undisturbed movement or acceleration in both directions is possible. Hence, a static test for providing a constant pressing force to the specimen 102 to be tested and/or for conducting a dynamic test for varying the impact force in a predefined time span can be provided. The electromechanical actuator 120 and the rod arrangement 110 are configured for pressing the rod arrangement 110 to the specimen 103 with a pressing force of more than 5kN.

Furthermore, the electromechanical actuator 120 is configured to move the rod arrangement 110 along the impact direction 103 to and away from the specimen holder 101. Hence, it is not only possible to provide a pressing force against the specimen 102 in a direction to the specimen 102, but also a pulling force in a direction away from the specimen 102. Hence, also tension tests and also a variety load condition between pressing/bending tests and tension tests can be provided by the inventive arrangement. In order to provide the tension tests, the rod arrangement 110 can be rigidly fixed to the specimen.

The rod arrangement 110 comprises an impact element 111 and a force transmitting rod 112, coupled to the electromechanical actuator 110. The impact element 111 is in particular harder than the specimen 102 to be tested. Furthermore, the impact element 111 may comprise in the shown exemplary embodiment an impact edge having a longitudinal extension.

The force transmitting rod 112, provides the coupling between the impact element 111 and the electromechanical actuator 120. The force transmitting rod 112 may be coupled to the movable part, e.g. a slide 121 of the electromechanical actuator 120. The slide 121 has a weight of more than 100kg. Hence, a high impact energy due to high mass of more than e.g. 60kg is provided.

The impact element 111 is detachably coupled to the force transmitting rod 112. Hence, impact elements 111 of different design and shape may be exchanged in order to test the specimen 102 with different load cases, for example. Furthermore, if an impact element 111 is damaged, a respective change of impact elements 111 is possible.

The rod arrangement 110 further comprises a force sensor 113 for measuring the impact force between the impact element 111 and the specimen 102 to be tested. The force sensor 113 is arranged between the impact element 111 and the force transmitting rod 112. Hence, if the force sensor 113 is arranged close to the impact element 111, a direct measurement and also a proper reachability of the force sensor 113 is possible. Specifically, if the force sensor 113 is mounted close to the impact element 111 at a front and no time delay of force signals during dynamic measurements is generated so that a very exact force measurement is provided.

The force sensor 113 is detachably mounted to at least one of the impact element 111 and the force transmitting rod 112. The force sensor 113 may be a piezo electric sensor or a DMS sensor.

The electromechanical actuator 120 is a linear motor comprising a movable slide 121 to which the rod arrangement 110 is coupled and a stator 122 extending along the impact direction 103. The slide 121 is drivable along the impact direction 103 relatively to the stator 122 by electromechanical driving forces generatable between the stator 122 and the slide 121. The linear motor produces a linear driving force along its length and hence along the impact direction 103. A typical mode of operation is as a Lorentz-type actuator, in which the applied force is linearly proportional to the current and the magnetic field. By the linear motor, the impact force and the speed of the rod arrangement 110 can be adjusted precisely.

The force transmitting rod 112 is coupled to the movable slide 121, wherein the force transmitting rod 112 has in particular a length along the impact direction 103 which is longer than a traveling distance of the slide 121 along the impact direction 103. Hence, the maximum traveling distance of the slide 121 can be used to move the rod arrangement 110, since the impact element 111 arranged on the force transmitting rod 112 is not in conflict with structural elements of the linear motor, because of the length of the force transmitting rod 112.

In the embodiment, the stator 122 is made of a rectangular, stator table 123 and a further stator table 124. The stator tables 123, 124 comprise a length along the impact direction 103 and a width orthogonal to the impact direction 103, wherein the length is longer than the width of the stator tables 123, 124.

The slide 121 is slidably arranged between the stator table 123 and the further stator table 124. Hence, by providing two stator tables 123, 124 which sandwiches the slide 121, a stronger magnet field for driving the slide 121 may be provided.

The slide 121 comprises magnet elements 127, in particular permanent magnet elements. The magnet elements 127 are arranged one after the other along the impact direction 103. The magnet elements 127 may form for example neodymium magnets. One line of magnets 127 is arranged on the top side of the slide 121 and one line of magnets 127 is arranged on the bottom side of the slide 121. Between the two lines of magnets, the slide 121 comprises a robust slide plate, in particular a metal plate made for example of aluminum, wherein the lines of magnets are arranged on respective opposite surfaces of the slide plate.

The stator tables 123, 124 comprises conductive coil 125. The respective coils 125 are around a respective stator table 123, 124 and generate the respective magnetic fields, necessary to interact with the magnets 127 of the slide 121 to generate a driving force. Specifically, three groups of coils 125 may be provided to one stator table 123, 124, so that a three-phase linear induction motor can be provided. The electrically conductive coils 125 are liquid, in particular water, cooled. Specifically, when providing a static load case, where impact element 111 is pressed against the specimen 102 without any movement, high temperatures may be generated at the respective coils 125 interacting with the slide 121.

Furthermore, the linear motor comprises a temperature sensor 126 for measuring a temperature of the coils 125. As described above, when providing a static load case, where the impact element is pressed against the specimen without any movement, high temperatures may be generated at the respective coils 125 interacting with the slide 121.

The arrangement 100 further comprises a supporting base 130, onto which the specimen holder 101, the rod arrangement 110 and the electromechanical actuator 120 are mounted (directly or indirectly via coupling supporting elements). The supporting base 130 transfers respective weight forces and dynamic forces to the ground.

Furthermore, the supporting base 130 comprises at least one guiding rail 131 extending along the impact direction 103, wherein the guiding rail 131.The slide 121 of the electromechanical actuator 120 is slidably coupled to the guiding rail 131. The guiding rail 131 may comprise a dove tail shape and the slide 121 may comprise a respectively shaped dove tail groove, or vice versa, for providing a slidable coupling. The guiding rail 131 is directly coupled via a supporting structure to the supporting base 130 and may also be fixed to the stator tables 123, 124 in order to support the slide 121 and the rod arrangement 110. The stator tables 123, 124 are for example coupled via a supporting structure to the supporting base 131. The supporting structure may be part pf a supporting base 130.

The arrangement 100 may further comprise a housing 201 for housing the electromagnetic actuator 120.

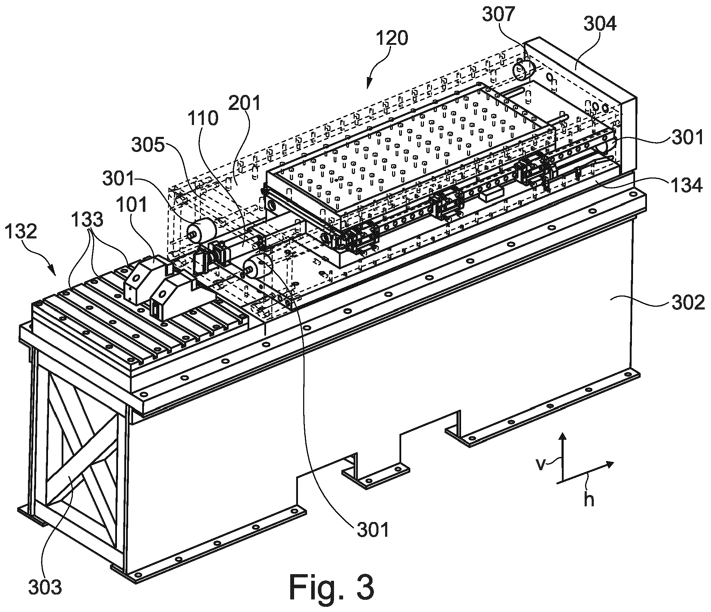

**Fig. 3** shows the arrangement 100 specifically with its supporting base 130 according to an exemplary embodiment of the present invention. The supporting base 130 is configured for providing a stiffness of more than 600 kN/mm. Hence, heigh weight forces and also dynamic forces may be transferred to the ground without causing vibrations which could negatively affect the testing procedure. The supporting base 130 is formed robust for example by the framework 303 of steel rods which can be arranged on the ground. The stiffness may be provided by the robust above-described framework 303 of steel beams and additionally by a vertical shear panel 302.

The vertical shear panel 302 extends between the ground on the one side and the specimen holder 101, the rod arrangement 110 and the electromechanical actuator 130 on the other side (and for example between the supporting plate 134 and the ground). The shear panel 302 is in particular a vertical orientated sheet, in particular a metal sheet. By providing the vertical shear panel 302, forces (specifically shear forces) extending along the vertical direction v and also along the impact direction 103 are absorbed and damped by the vertical shear panel 302. According to further exemplary embodiment, wherein the shear panel 302 is configured for having eigenfrequencies along the impact direction 103 of more than 300 Hz.

The supporting base 130 comprises in particular the supporting plate 134, in particular an aluminum plate, to which at least the specimen holder 101 and the electromechanical actuator 120 is mounted. The supporting plate 134 forms a robust and stiff accommodation surface and may be arranged on the rigid framework 303 of steel beams of the supporting base 130. By arranging the supporting plate 134 within a horizontal plane, forces directed along the horizontal direction h are damped and absorbed efficiently.

The apparatus 100 further comprises at least one stopper element 301 configured to stop the movement of the slide 121 along the impact direction 103, wherein the stopper element 301 is in particular made of elastomeric material. The stopper element may be fixed to the housing 201 of the arrangement 100 and/or directly or indirectly to the supporting base 130. The housing 201 may further comprise a robust back plate 304 and a robust front plate 305 to which the stopper elements 301 are mounted for limiting the movement of the slide 121.

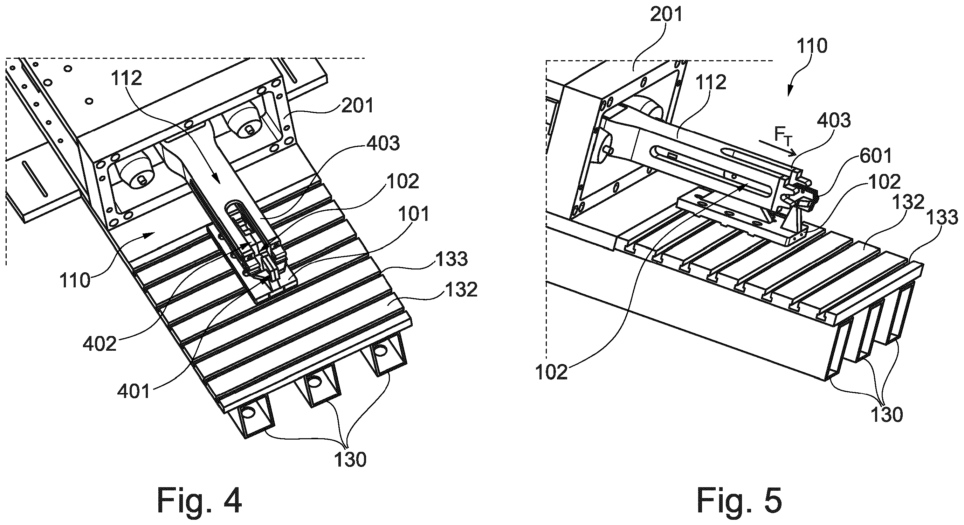

**Fig. 4** and **Fig. 5** show an exemplary embodiment of an apparatus 100 providing a rod arrangement 110 for applying a tractive force FT to the specimen 102. The specimen holder 101 is fixed to the accommodation section/plate 132. Furthermore, the specimen holder 101 comprises a clamping element 402, for example clamping jaws, for clamping the specimen 101 non-movably with respect to the supporting base 130. Spaced apart from the clamping element 402, a gripping element 401 is provided at the movable force transmitting rod 112. For example, the gripping element 401 is mounted at the free end of the force transmitting rod 112. Specifically, the force transmitting rod 112 comprises a split section and forms a fork like end section. The fork like end section 403 passes the specimen 102. the end of the fork like end section 403, the gripping element 401 is arranged. The gripping element 401 grips the specimen 102 spaced apart with respect to the clamping section of the clamping element 402. The gripping element 401 may fix the specimen 102 for example by clamping or by a form fit fixation. Hence, if the force transmitting rod 112 is moved out of the housing 201 and hence along a respective horizontal moving direction, the gripping element 401 is moved away from the clamping element 402, such that a tractive force FT is transmitted to the specimen 102 to be tested.

**List of reference signs:**

| | | | |
|---|---|---|---|
| 100 | apparatus | 201 | housing |
| 101 | specimen holder | 301 | stopper element |
| 102 | specimen | 302 | shear panel |
| 103 | impact direction | 303 | support framework |
| | | 304 | back plate |
| 110 | rod arrangement | 305 | front plate |
| 111 | impact element | 401 | gripping element |
| 112 | force transmitting rod | 402 | clamping element |
| 113 | force sensor | 403 | end section |
| 120 | electromechanical actuator | | |
| 121 | slide | v | vertical direction |
| 122 | stator | h | horizontal direction |
| 123 | stator table | FT | tractive force |
| 124 | further stator table | | |
| 125 | coil | | |
| 126 | temperature sensor | | |
| 127 | magnet element | | |
| 130 | supporting base | | |
| 131 | guiding rail | | |
| 132 | accommodation section | | |
| 133 | accommodation groove | | |
| 134 | supporting plate | | |

## Claims

1. Apparatus (100) for material testing of a specimen (102), the apparatus (100) comprising
a specimen holder arrangement comprising a specimen holder (101) for holding a specimen (102) to be tested,
a rod arrangement (110) for moving with respect to the specimen holder (101) for transmitting a mechanical load to the specimen, and
an electromechanical actuator arrangement for moving at least one of the rod arrangement (110) and the specimen holder arrangement with respect to each other along a longitudinal impact direction (103),
wherein the electromechanical actuator arrangement is configured to adjust the speed to any speed between 0 m/s to 12 m/s between the rod arrangement (110) and the specimen holder arrangement for transmitting a mechanical load to the specimen (102),
wherein the electromechanical actuator arrangement comprises an electromechanical actuator (120) which is configured to move the rod arrangement (110) along the impact direction (103) to and away from the specimen holder (101),
**characterized in that**
the electromechanical actuator (120) is a linear motor comprising a movable slide (121) to which the rod arrangement (110) is coupled and a stator (122) extending along the impact direction (103), and the stator (122) comprises a stator table (123).

2. Apparatus (100) according to claim 1,
wherein the impact direction (103) is parallel to a horizontal direction, when the apparatus (100) is arranged on a ground.

3. Apparatus (100) according to claim 1 or 2, comprising at least one of the following features:
wherein the specimen holder arrangement, the electromechanical actuator arrangement and the rod arrangement (110) are configured for pressing the rod arrangement (110) to the specimen (102) with a pressing force of more than 5kN, in particular more than 15kN, further in particular more than 25 kN;
wherein the electromechanical actuator arrangement and the rod arrangement (110) are configured for at least one of conducting a static test for providing a pressing force to the specimen (102) to be tested and for conducting a dynamic test for varying the impact force in a predefined time span.

4. Apparatus (100) according to any one of claims 1 to 3,
wherein the electromechanical actuator (120) is configured to move the rod arrangement (110) along the impact direction (103) to and away from the specimen holder (101), to perform a static test or a cyclic test providing varying loads to the specimen (102).

5. Apparatus (100) according to claim 1,
wherein the electromechanical actuator arrangement comprises a further electromechanical actuator which is configured to move the specimen holder arrangement along the impact direction (103) to and away from the rod arrangement (110), in particular to perform a static test, a dynamic test or a cyclic test providing varying loads to the specimen (102).

6. Apparatus (100) according to any one of claims 4 to 5, wherein the rod arrangement (110) comprises an impact element (111) and a force transmitting element, in particular a force transmitting rod (112), coupled to the electromechanical actuator (120),
wherein the impact element (111) is detachably coupled to the force transmitting element.

7. Apparatus (100) according to claim 6
wherein the rod arrangement (110) further comprises a force sensor (113) for measuring the impact force between the impact element (111) and the specimen (102) to be tested;
wherein the force sensor comprises at least one of the following features:
wherein the force sensor (113) is arranged between the impact element (111) and the force transmitting element;
wherein the force sensor (113) is detachably mounted to at least one of the impact element (111) and the force transmitting element;
wherein the force sensor (113) is a piezo electric sensor.

8. Apparatus (100) according to any one of claims 4 to 7, wherein the slide (121) is drivable along the impact direction (103) relatively to the stator (122) by electromechanical driving forces generatable between the stator (122) and the slide (121).

9. Apparatus (100) according to any one of claims 6 to 8,
wherein the force transmitting element is coupled to the movable slide (121), wherein the force transmitting element has in particular a length along the impact direction (103) which is longer than a traveling distance of the slide (121) along the impact direction (103).

10. Apparatus (100) according to any one of claims 8 or 9
wherein the stator (122) comprises a rectangular stator table (123);
wherein the stator table (123) comprises a length along the impact direction (103) and a width orthogonal to the impact direction (103),
wherein the length is longer than the width of the stator table (123);
wherein the stator table (123) comprises at least one electrically conductive coil (125).
wherein the at least one electrically conductive coil (125) is liquid, in particular water cooled;
wherein the linear motor comprises a temperature sensor (126) for measuring a temperature of the at least one coil (125);
wherein the stator (122) comprises a further, in particular rectangular, stator table (124), in particular comprising at least one further electrically conductive coil (125),
wherein the slide (121) is slidably arranged between the stator table (123) and the further stator table (124);
wherein the slide (121) comprises magnet elements (127), in particular permanent magnet elements;
wherein the magnet elements (127) are arranged one after the other along the impact direction (103);
wherein the slide (121) has a weight of more than 60 kg;
wherein the apparatus (100) further comprises
at least one stopper element (301) configured to stop the movement of the slide (121) along the impact direction (103),
wherein the stopper element (301) is in particular made of elastomeric material.

11. Apparatus (100) according to any one of claims 1 to 10, further comprising:
a supporting base (130), onto which the specimen holder (101), the rod arrangement (110) and the electromechanical actuator arrangement are mounted, and
at least one guiding rail (131) extending along the impact direction (103),
wherein the guiding rail (131) is coupled to the supporting base (130), wherein at least one of the rod arrangement (110) and a movable part of the electromechanical actuator (120) is slidably coupled to the guiding rail (131).

12. Apparatus (100) according to claim 11, comprising:
wherein the supporting base (130) is configured for providing a stiffness of more than 600 kN/mm along the impact direction (103);
wherein the supporting base (130) comprises in particular a supporting plate (134), in particular an aluminum plate, to which at least the specimen holder arrangement and the electromechanical actuator arrangement is mounted;
wherein the supporting base (130) comprises at least one vertical shear panel (302) extending between the ground on the one side and the specimen holder arrangement, the rod arrangement (110) and the electromechanical actuator arrangement on the other side,
wherein the shear panel (302) is in particular a vertical orientated sheet, in particular a metal sheet;
wherein the shear panel (302) is configured for having eigenfrequencies along the impact direction (103) of more than 300 Hz.

13. Apparatus (100) according to any one of claims 11 to 12,
wherein the specimen holder arrangement is detachably coupled to a holder accommodation section (132) of the supporting base (130);
wherein the holder accommodation section (132) comprises at least one accommodation groove (133),
wherein the specimen holder arrangement comprises at least one accommodation pin,
wherein the accommodation pin is slidable into the accommodation groove (133) for detachably coupling the specimen holder arrangement to the holder accommodation section (132),
wherein the accommodation groove (133) is formed in particular perpendicular to the impact direction (103).

14. Apparatus (100) according to any one of claims 1 to 13,
wherein the specimen (102) to be tested is a battery device.

15. Method for material testing of a specimen (102) by an apparatus (100) according to any one of claims 1-14, the method comprising
attaching a specimen (102) to be tested to the specimen holder (101),
moving at least one of the rod arrangement (110) and the specimen holder (101) with respect to each other to adjust the speed to any speed between 0 m/s to 12 m/s such that the rod arrangement (110) transmits a mechanical load to the specimen (102) for material testing of the specimen (102),
wherein the electromechanical actuator arrangement comprises an electromechanical actuator (120) which is configured to move the rod arrangement (110) along the impact direction (103) to and away from the specimen holder (101),
wherein the electromechanical actuator (120) is a linear motor comprising a movable slide (121) to which the rod arrangement (110) is coupled and a stator (122) extending along the impact direction (103), and
wherein the stator (122) comprises a stator table (123).

## Patentansprüche

1. Eine Vorrichtung (100) zur Materialprüfung einer Probe (102), wobei die Vorrichtung (100) aufweist
eine Probenhalteranordnung, die einen Probenhalter (101) zum Halten einer zu prüfenden Probe (102) aufweist,
eine Stangenanordnung (110) zum Bewegen in Bezug auf den Probenhalter (101) zum Übertragen einer mechanischen Last auf die Probe, und
eine elektromechanische Aktuatoranordnung zum Bewegen der Stangenanordnung (110) und/oder der Probenhalteranordnung in Bezug zueinander entlang einer Längsaufprallrichtung (103),
wobei die elektromechanische Aktuatoranordnung konfiguriert ist, um die Geschwindigkeit auf eine beliebige Geschwindigkeit zwischen 0 m/s bis 12 m/s zwischen der Stangenanordnung (110) und der Probenhalteranordnung einzustellen, zum Übertragen einer mechanischen Last auf die Probe (102),
wobei die elektromechanische Aktuatoranordnung einen elektromechanischen Aktuator (120) aufweist, der konfiguriert ist, um die Stangenanordnung (110) entlang der Aufprallrichtung (103) zu dem Probenhalter (101) hin und von diesem weg zu bewegen,
**dadurch gekennzeichnet, dass**
der elektromechanische Aktuator (120) ein Linearmotor ist, der einen beweglichen Schlitten (121), mit dem die Stangenanordnung (110) gekoppelt ist, und einen Stator (122) aufweist, der sich entlang der Aufprallrichtung (103) erstreckt, und
der Stator (122) einen Statortisch (123) aufweist.

2. Die Vorrichtung (100) nach Anspruch 1,
wobei die Aufprallrichtung (103) parallel zu einer horizontalen Richtung ist, wenn die Vorrichtung (100) auf einem Boden angeordnet ist.

3. Die Vorrichtung (100) nach Anspruch 1 oder 2, aufweisend mindestens eines der folgenden Merkmale:
wobei die Probenhalteranordnung, die elektromechanische Aktuatoranordnung und die Stangenanordnung (110) konfiguriert sind, um die Stangenanordnung (110) mit einer Druckkraft von mehr als 5 kN, insbesondere mehr als 15 kN, weiter insbesondere mehr als 25 kN, auf die Probe (102) zu drücken;
wobei die elektromechanische Aktuatoranordnung und die Stangenanordnung (110) für mindestens eines konfiguriert sind von Durchführen einer statischen Prüfung zum Bereitstellen einer Druckkraft auf die zu prüfende Probe (102) und zum Durchführen einer dynamischen Prüfung zum Variieren der Aufprallkraft in einer vordefinierten Zeitspanne.

4. Die Vorrichtung (100) nach einem der Ansprüche 1 bis 3,
wobei der elektromechanische Aktuator (120) konfiguriert ist, um die Stangenanordnung (110) entlang der Aufprallrichtung (103) zu dem Probenhalter (101) hin und von diesem weg zu bewegen, um eine statische Prüfung oder eine zyklische Prüfung durchzuführen, die variierende Lasten auf die Probe (102) bereitstellt.

5. Die Vorrichtung (100) nach Anspruch 1,
wobei die elektromechanische Aktuatoranordnung einen weiteren elektromechanischen Aktuator aufweist, der konfiguriert ist, um die Probenhalteranordnung entlang der Aufprallrichtung (103) zu der Stangenanordnung (110) hin und von dieser weg zu bewegen, insbesondere um eine statische Prüfung, eine dynamische Prüfung oder eine zyklische Prüfung durchzuführen, die variierende Lasten auf die Probe (102) bereitstellt.

6. Die Vorrichtung (100) nach einem der Ansprüche 4 bis 5,
wobei die Stangenanordnung (110) ein Aufprallelement (111) und ein Kraftübertragungselement, insbesondere eine Kraftübertragungsstange (112), aufweist, das mit dem elektromechanischen Aktuator (120) gekoppelt ist, wobei das Aufprallelement (111) lösbar mit dem Kraftübertragungselement gekoppelt ist.

7. Die Vorrichtung (100) nach Anspruch 6,
wobei die Stangenanordnung (110) ferner einen Kraftsensor (113) zum Messen der Aufprallkraft zwischen dem Aufprallelement (111) und der zu prüfenden Probe (102) aufweist;
wobei der Kraftsensor mindestens eines der folgenden Merkmale aufweist:
wobei der Kraftsensor (113) zwischen dem Aufprallelement (111) und dem Kraftübertragungselement angeordnet ist;
wobei der Kraftsensor (113) lösbar an mindestens einem von dem Aufprallelement (111) und dem Kraftübertragungselement montiert ist;
wobei der Kraftsensor (113) ein piezoelektrischer Sensor ist.

8. Die Vorrichtung (100) nach einem der Ansprüche 4 bis 7,
wobei der Schlitten (121) entlang der Aufprallrichtung (103) relativ zu dem Stator (122) durch elektromechanische Antriebskräfte antreibbar ist, die zwischen dem Stator (122) und dem Schlitten (121) erzeugbar sind.

9. Die Vorrichtung (100) nach einem der Ansprüche 6 bis 8,
wobei das Kraftübertragungselement mit dem beweglichen Schlitten (121) gekoppelt ist,
wobei das Kraftübertragungselement insbesondere eine Länge entlang der Aufprallrichtung (103) aufweist, die länger als eine Verfahrstrecke des Schlittens (121) entlang der Aufprallrichtung (103) ist.

10. Die Vorrichtung (100) nach einem der Ansprüche 8 oder 9,
wobei der Stator (122) einen rechteckigen Statortisch (123) aufweist;
wobei der Statortisch (123) eine Länge entlang der Aufprallrichtung (103) und eine Breite orthogonal zu der Aufprallrichtung (103) aufweist,
wobei die Länge länger als die Breite des Statortischs (123) ist;
wobei der Statortisch (123) mindestens eine elektrisch leitfähige Spule (125) aufweist;
wobei die mindestens eine elektrisch leitfähige Spule (125) flüssig-, insbesondere wassergekühlt, ist;
wobei der Linearmotor einen Temperatursensor (126) zum Messen einer Temperatur der mindestens einen Spule (125) aufweist;
wobei der Stator (122) einen weiteren, insbesondere rechteckigen, Statortisch (124) aufweist, der insbesondere mindestens eine weitere elektrisch leitfähige Spule (125) aufweist,
wobei der Schlitten (121) zwischen dem Statortisch (123) und dem weiteren Statortisch (124) verschiebbar angeordnet ist;
wobei der Schlitten (121) Magnetelemente (127), insbesondere Permanentmagnetelemente, aufweist;
wobei die Magnetelemente (127) entlang der Aufprallrichtung (103) hintereinander angeordnet sind;
wobei der Schlitten (121) ein Gewicht von mehr als 60 kg aufweist;
wobei die Vorrichtung (100) ferner aufweist
mindestens ein Stopperelement (301), das konfiguriert ist, um die Bewegung des Schlittens (121) entlang der Aufprallrichtung (103) zu stoppen, wobei das Stopperelement (301) insbesondere aus elastomerem Material hergestellt ist.

11. Die Vorrichtung (100) nach einem der Ansprüche 1 bis 10, ferner aufweisend:
eine Stützbasis (130), auf der der Probenhalter (101), die Stangenanordnung (110) und die elektromechanische Aktuatoranordnung montiert sind, und
mindestens eine Führungsschiene (131), die sich entlang der Aufprallrichtung (103) erstreckt,
wobei die Führungsschiene (131) mit der Stützbasis (130) gekoppelt ist, wobei mindestens eines von der Stangenanordnung (110) und einem beweglichen Teil des elektromechanischen Aktuators (120) verschiebbar mit der Führungsschiene (131) gekoppelt ist.

12. Die Vorrichtung (100) nach Anspruch 11, aufweisend:
wobei die Stützbasis (130) konfiguriert ist, um eine Steifigkeit von mehr als 600 kN/mm entlang der Aufprallrichtung (103) bereitzustellen;
wobei die Stützbasis (130) insbesondere eine Stützplatte (134), insbesondere eine Aluminiumplatte, aufweist, an der mindestens die Probenhalteranordnung und die elektromechanische Aktuatoranordnung montiert sind;
wobei die Stützbasis (130) mindestens eine vertikale Scherplatte (302) aufweist, die sich zwischen dem Boden auf der einen Seite und der Probenhalteranordnung, der Stangenanordnung (110) und der elektromechanischen Aktuatoranordnung auf der anderen Seite erstreckt, wobei die Scherplatte (302) insbesondere ein vertikal ausgerichtetes Blech, insbesondere ein Metallblech, ist;
wobei die Scherplatte (302) konfiguriert ist, um Eigenfrequenzen entlang der Aufprallrichtung (103) von mehr als 300 Hz aufzuweisen.

13. Die Vorrichtung (100) nach einem der Ansprüche 11 bis 12, aufweisend:
wobei die Probenhalteranordnung lösbar mit einem Halteraufnahmeabschnitt (132) der Stützbasis (130) gekoppelt ist;
wobei der Halteraufnahmeabschnitt (132) mindestens eine Aufnahmenut (133) aufweist,
wobei die Probenhalteranordnung mindestens einen Aufnahmestift aufweist, wobei der Aufnahmestift in die Aufnahmenut (133) verschiebbar ist, um die Probenhalteranordnung lösbar mit dem Halteraufnahmeabschnitt (132) zu koppeln,
wobei die Aufnahmenut (133) insbesondere senkrecht zu der Aufprallrichtung (103) ausgebildet ist.

14. Die Vorrichtung (100) nach einem der Ansprüche 1 bis 13,
wobei die zu prüfende Probe (102) eine Batterievorrichtung ist.

15. Ein Verfahren zur Materialprüfung einer Probe (102) durch eine Vorrichtung (100) nach einem der Ansprüche 1-14, wobei das Verfahren aufweist
Anbringen einer zu prüfenden Probe (102) an dem Probenhalter (101),
Bewegen der Stangenanordnung (110) und/oder des Probenhalters (101) in Bezug aufeinander, um die Geschwindigkeit auf eine beliebige Geschwindigkeit zwischen 0 m/s bis 12 m/s einzustellen, so dass die Stangenanordnung (110) eine mechanische Last auf die Probe (102) zur Materialprüfung der Probe (102) überträgt,
wobei die elektromechanische Aktuatoranordnung einen elektromechanischen Aktuator (120) aufweist, der konfiguriert ist, um die Stangenanordnung (110) entlang der Aufprallrichtung (103) zu dem Probenhalter (101) hin und von diesem weg zu bewegen,
wobei der elektromechanische Aktuator (120) ein Linearmotor ist, der einen beweglichen Schlitten (121), mit dem die Stangenanordnung (110) gekoppelt ist, und einen Stator (122) aufweist, der sich entlang der Aufprallrichtung (103) erstreckt, und
wobei der Stator (122) einen Statortisch (123) aufweist.

## Revendications

1. Appareil (100) de test de matériau d'un échantillon (102), l'appareil (100) comprenant
un agencement de porte-échantillon comprenant un porte-échantillon (101) pour maintenir un échantillon (102) à tester,
un agencement de tige (110) pour un déplacement par rapport au porte-échantillon (101) afin de transmettre une charge mécanique à l'échantillon, et
un agencement d'actionneur électromécanique pour déplacer au moins l'un de l'agencement de tige (110) et de l'agencement de porte-échantillon l'un par rapport à l'autre le long d'une direction d'impact longitudinale (103),
dans lequel l'agencement d'actionneur électromécanique est configuré pour ajuster la vitesse à toute vitesse comprise entre 0 m/s et 12 m/s entre l'agencement de tige (110) et l'agencement de porte-échantillon afin de transmettre une charge mécanique à l'échantillon (102),
dans lequel l'agencement d'actionneur électromécanique comprend un actionneur électromécanique (120) qui est configuré pour déplacer l'agencement de tige (110) le long de la direction d'impact (103) vers et à l'écart du porte-échantillon (101),
**caractérisé en ce que**
l'actionneur électromécanique (120) est un moteur linéaire comprenant un coulisseau mobile (121) auquel l'agencement de tige (110) est couplé et un stator (122) s'étendant le long de la direction d'impact (103), et
le stator (122) comprend une table de stator (123).

2. Appareil (100) selon la revendication 1, dans lequel la direction d'impact (103) est parallèle à une direction horizontale, lorsque l'appareil (100) est agencé sur un sol.

3. Appareil (100) selon la revendication 1 ou 2, comprenant au moins l'une des caractéristiques suivantes :
dans lequel l'agencement de porte-échantillon, l'agencement d'actionneur électromécanique et l'agencement de tige (110) sont configurés pour presser l'agencement de tige (110) sur l'échantillon (102) avec une force de pression supérieure à 5 kN, en particulier supérieure à 15 kN, plus particulièrement supérieure à 25 KN ;
dans lequel l'agencement d'actionneur électromécanique et l'agencement de tige (110) sont configurés pour au moins une parmi la réalisation d'un test statique pour fournir une force de pression à l'échantillon (102) à tester et la réalisation d'un test dynamique pour faire varier la force d'impact dans un intervalle de temps prédéfini.

4. Appareil (100) selon l'une quelconque des revendications 1 à 3, dans lequel l'actionneur électromécanique (120) est configuré pour déplacer l'agencement de tige (110) le long de la direction d'impact (103) vers et à l'écart du porte-échantillon (101), afin d' effectuer un test statique ou un test cyclique fournissant des charges variables à l'échantillon (102).

5. Appareil (100) selon la revendication 1, dans lequel l'agencement d'actionneur électromécanique comprend un actionneur électromécanique supplémentaire qui est configuré pour déplacer l'agencement de porte-échantillon le long de la direction d'impact (103) vers et à l'écart de l'agencement de tige (110), en particulier pour effectuer un test statique, un test dynamique ou un test cyclique fournissant des charges variables à l'échantillon (102).

6. Appareil (100) selon l'une quelconque des revendications 4 à 5,
dans lequel l'agencement de tige (110) comprend un élément d'impact (111) et un élément de transmission de force, en particulier une tige de transmission de force (112), couplés à l'actionneur électromécanique (120),
dans lequel l'élément d'impact (111) est couplé de manière amovible à l'élément de transmission de force.

7. Appareil (100) selon la revendication 6,
dans lequel l'agencement de tige (110) comprend en outre un capteur de force (113) pour mesurer la force d'impact entre l'élément d'impact (111) et l'échantillon (102) à tester ;
dans lequel le capteur de force comprend au moins l'une des caractéristiques suivantes :
dans lequel le capteur de force (113) est agencé entre l'élément d'impact (111) et l'élément de transmission de force ;
dans lequel le capteur de force (113) est monté de manière amovible sur au moins l'un de l'élément d'impact (111) et de l'élément de transmission de force ;
dans lequel le capteur de force (113) est un capteur piézoélectrique.

8. Appareil (100) selon l'une quelconque des revendications 4 à 7, dans lequel le coulisseau (121) peut être entraîné le long de la direction d'impact (103) par rapport au stator (122) par des forces d'entraînement électromécaniques pouvant être générées entre le stator (122) et le coulisseau (121).

9. Appareil (100) selon l'une quelconque des revendications 6 à 8, dans lequel l'élément de transmission de force est couplé au coulisseau mobile (121), dans lequel l'élément de transmission de force présente en particulier une longueur le long de la direction d'impact (103) qui est plus longue qu'une distance de déplacement du coulisseau (121) le long de la direction d'impact (103).

10. Appareil (100) selon l'une quelconque des revendications 8 ou 9,
dans lequel le stator (122) comprend une table de stator rectangulaire (123) ;
dans lequel la table de stator (123) comprend une longueur le long de la direction d'impact (103) et une largeur orthogonale à la direction d'impact (103),
dans lequel la longueur est plus longue que la largeur de la table de stator (123) ;
dans lequel la table de stator (123) comprend au moins une bobine électroconductrice (125) ;
dans lequel la au moins une bobine électroconductrice (125) est liquide, en particulier refroidie par eau ;
dans lequel le moteur linéaire comprend un capteur de température (126) pour mesurer une température de la au moins une bobine (125) ;
dans lequel le stator (122) comprend une table de stator supplémentaire (124), en particulier rectangulaire, comprenant en particulier au moins une autre bobine électroconductrice (125),
dans lequel le coulisseau (121) est agencé de manière coulissante entre la table de stator (123) et la table de stator supplémentaire (124) ;
dans lequel le coulisseau (121) comprend des éléments d'aimant (127), en particulier des éléments d'aimant permanent ;
dans lequel les éléments d'aimant (127) sont agencés l'un après l'autre le long de la direction d'impact (103) ;
dans lequel le coulisseau (121) présente un poids supérieur à 60 kg ;
lequel l'appareil (100) comprend en outre :
au moins un élément d'arrêt (301) configuré pour arrêter le déplacement du coulisseau (121) le long de la direction d'impact (103),
dans lequel l'élément d'arrêt (301) est en particulier en matériau élastomère.

11. Appareil (100) selon l'une quelconque des revendications 1 à 10, comprenant en outre :
une base de support (130), sur laquelle le porte-échantillon (101), l'agencement de tige (110) et l'agencement d'actionneur électromécanique sont montés, et
au moins un rail de guidage (131) s'étendant le long de la direction d'impact (103),
dans lequel le rail de guidage (131) est couplé à la base de support (130),
dans lequel au moins l'un de l'agencement de tige (110) et d'une partie mobile de l'actionneur électromécanique (120) est couplé de manière coulissante au rail de guidage (131).

12. Appareil (100) selon la revendication 11, dans lequel la base de support (130) est configurée pour fournir une rigidité de plus de 600 kN/mm le long de la direction d'impact (103) ;
dans lequel la base de support (130) comprend en particulier une plaque de support (134), en particulier une plaque d'aluminium, sur laquelle au moins l'agencement de porte-échantillon et l'agencement d'actionneur électromécanique sont montés ;
dans lequel la base de support (130) comprend au moins un panneau de cisaillement vertical (302) s'étendant entre le sol d'un côté et l'agencement de porte-échantillon, l'agencement de tige (110) et l'agencement d'actionneur électromécanique de l'autre côté,
dans lequel le panneau de cisaillement (302) est en particulier une feuille orientée verticalement, en particulier une feuille métallique ;
dans lequel le panneau de cisaillement (302) est configuré pour avoir des fréquences propres le long de la direction d'impact (103) de plus de 300 Hz.

13. Appareil (100) selon l'une quelconque des revendications 11 à 12,
dans lequel l'agencement de porte-échantillon est couplé de manière amovible à une section de logement de porte-échantillon (132) de la base de support (130) ;
dans lequel la section de logement de support (132) comprend au moins une rainure de logement (133),
dans lequel l'agencement de porte-échantillon comprend au moins une broche de logement,
dans lequel la broche de logement peut coulisser dans la rainure de logement (133) pour coupler de manière amovible l'agencement de porte-échantillon à la section de logement de porte-échantillon (132),
dans lequel la rainure de logement (133) est formée en particulier perpendiculairement à la direction d'impact (103).

14. Appareil (100) selon l'une quelconque des revendications 1 à 13, dans lequel l'échantillon (102) à tester est un dispositif de batterie.

15. Procédé de test de matériau d'un échantillon (102) par un appareil (100) selon l'une quelconque des revendications 1 à 14, le procédé comprenant les étapes consistant à
fixer un échantillon (102) à tester au porte-échantillon (101),
déplacer au moins un certain de l'agencement de tige (110) et du porte-échantillon (101) par rapport à l'autre pour ajuster la vitesse à toute vitesse entre 0 m/s et 12 m/s de telle sorte que l'agencement de tige (110) transmette une charge mécanique à l'échantillon (102) pour un test de matériau de l'échantillon (102),
dans lequel l'agencement d'actionneur électromécanique comprend un actionneur électromécanique (120) qui est configuré pour déplacer l'agencement de tige (110) le long de la direction d'impact (103) vers et à l'écart du porte-échantillon (101),
dans lequel l'actionneur électromécanique (120) est un moteur linéaire comprenant un coulisseau mobile (121) auquel l'agencement de tige (110) est couplé et un stator (122) s'étendant le long de la direction d'impact (103), et
dans lequel le stator (122) comprend une table de stator (123).
